# EUROPEAN PATENT APPLICATION

(11) **EP 0 595 793 A2**
(43) Date of publication of application: **04.05.1994**
(21) Application number: 94200110.8
(22) Date of filing: 08.03.1991
(51) Int. Cl.: F16H 61/12, F16H 61/02, F16H 61/38

(54) **Electro-mechanical hydraulic pressure control means**

(30) Priority: 12.04.1990 NL 9000860
(62) Divisional of application: 91200513.9
(71) Applicant: Van Doorne's Transmissie B.V., NL-5026 RA Tilburg (NL)
(72) Inventor: Hendriks, Emery Frederik Marie, NL-5591 NR Heeze (NL); Roovers, Wilhelmus C.W.M., NL-4841 HE Prinsenbeek (NL); d'Herripon, Bastiaan Andreas, NL-5025 GD Tilburg (NL)
(74) Representative: van Westenbrugge, Andries

(57) **Abstract**

Electro-mechancial hydraulic pressure control means (96) having an axially movable valve body (97) and a coil (99) having a movable core (100) where the core (100) is connected to the valve body (97), whereby the position of the valve body (97) is influenced by driving the coil (99), so as to set one or more pressure levels, and where, in the event of power failure, the valve body (97) assumes a position in which a safe high pressure is set due to the bias of a spring (101).

## Description

The invention relates to an electro-mechanical means comprising an axially movable valve body, and a coil having a movable core.

Such an electro-mechanical means is commonly known and is used to control a hydraulic pressure. The valve body of the known means was either moved by means of a solenoid or by the use of a pilot valve or an auxiliary valve.

A disadvantage of the known electro-mechanical means is that the electric current indirectly controls the hydraulic pressure (via the solenoid or pilot or auxiliary valve).

An object of the present invention is to provide an electro-mechanical means which overcome the above mentioned disadvantage. To this end the electro-mechanical means in accordance with the invention are characterized in that the core is connected to the valve body, whereby the position of the valve body is influenced by driving the coil, so as to set one or more pressure levels.

The electro-mechanical means thus work directly, i.e. they function as a direct converter of the electric current into a required hydraulic pressure. The use of a pilot valve or an auxiliary valve, as was usual, has become redundant as a result of this direct control method.

A preferred embodiment of the electro-mechanical means in accordance with the invention is characterized in that the valve body also functions as a core and is partially located within the coil for that purpose.

A further embodiment is characterized in that the valve body has at least one surface in a space to be filled with hydraulic fluid, so as to exert a hydraulic force on the valve body, which force, combined with the force produced by driving the coil, is utilized for influencing the position of the valve body so as to set one or more pressure levels. Thus the hydraulic pressure in the space is used to support the action of the coil.

Yet a further embodiment is characterized in that said means have a spring coupled to the valve body, which pushes the valve body in the direction of the position in which the highest pressure is set.

A very important advantage from a point of view of safety obtained by this embodiment is that, in the unlikely event of a power failure, the electro-mechancial means automatically assume a position, under the influence of the spring, in which a safe high pressure is set. In that case the transmission keeps functioning in spite of the power failure.

With the electro-mechanical means, in particular those wherein the valve body is directly connected to the core of the coil or wherein the valve body itself functions as a core, instability of hysteresis may occur when the coil is driven with a certain current. According to the invention this can be largely prevented by an further embodiment of the electro-mechanical means which are characterized in that the coil provides a dither frequency on the current, so as to stabilize the electro-mechanical means.

The invention and its further advantages will be further discussed with reference to the drawing, in which:
Figure 1, shows a possible embodiment of elecro-mechanical means;
Figure 2, shows an embodiment of the electro-mechanical means for use in a transmission, said means being provided with a safety valve; and
Figure 3, shows a further embodiment of the electro-mechanical means for use in a transmission, provided with a safety valve. A preferred embodiment of the electro-mechanical means provided with reference numeral 96 is illustrated in Figure 1. The means 96 illustrated in this embodiment comprise a valve body 97, which is axially movable within a space 98 under the influence of a movable core 100 accommodated in a coil 99.
   The valve body 97 bears against a spring 101, whose bias can be set by means of an adjusting screw 102. The contstruction of the valve body 97 is such that said valve body narrows in the space 98, from an effective surface A1 to an effective surface A2, which is smaller than A1. Lines 103 and 104 terminate in the space 98, whose passages may be controlled by moving the valve body 97. A pump (not shown) may e.g. be connected to the line 103, whereby the line 104 can be used as a blow-off for the fluid to be delivered by the pump. By driving the coil 99 it is possible the influence the axial position, and thus the passage, so that in that case a pressure is effected in the line 103 which is dependent on the current through the coil 99. If a fluid pressure is present in the space 98 a net force against the spring force of the spring 101 will co-operate with the force exerted by the coil 99, and a required position of the value body 97 will be adjusted on the basis of this equilibrium of forces. The net force produced by the hydraulic pressure in the space 98 works against the spring pressure, since the effective surface A1 is larger than the effective surface A2. Thus the hydraulic pressure in the space 98 is used to support the action of the coil 99. The electro-mechanical means 96 thus work directly, i.e. they function as a direct converter of the electric current I into a required hydraulic pressure. The use of pilot valve or an auxiliary valve, as was usual, has become redundant as a result of this direct control method.

The electro-mechanical means 96 will be incorporated in a control loop, in order to reduce their sensitivity to the effect that the pressure in the space 98 has on control behaviour of said means, a converter 105 connected to the line 103 for converting the hydraulic pressure in the line 103 into a corresponding electric signal P(MV) being present in said control loop. Said control loop furthermore contains a differential amplifier 106 having two inputs, viz. P(MV) and P(DV), and one output 107, to which the coil 99 is connected. As long as the differential amplifier detects a differential signal between the measured value P(MV) and the required value P(DV), said amplifier will effect a current through the coil 99 so as to move the valve body 97, until an equilibrium has been adjusted and both signals are equal to each other.

A very important advantage from a point of view of safety is that, in the unlikely event of a power failure, the electro-mechanical means automatically assume a position, under the influence of the spring, in which a safe high pressure is set. In that case the transmission keeps functioning in spite of the power failure.

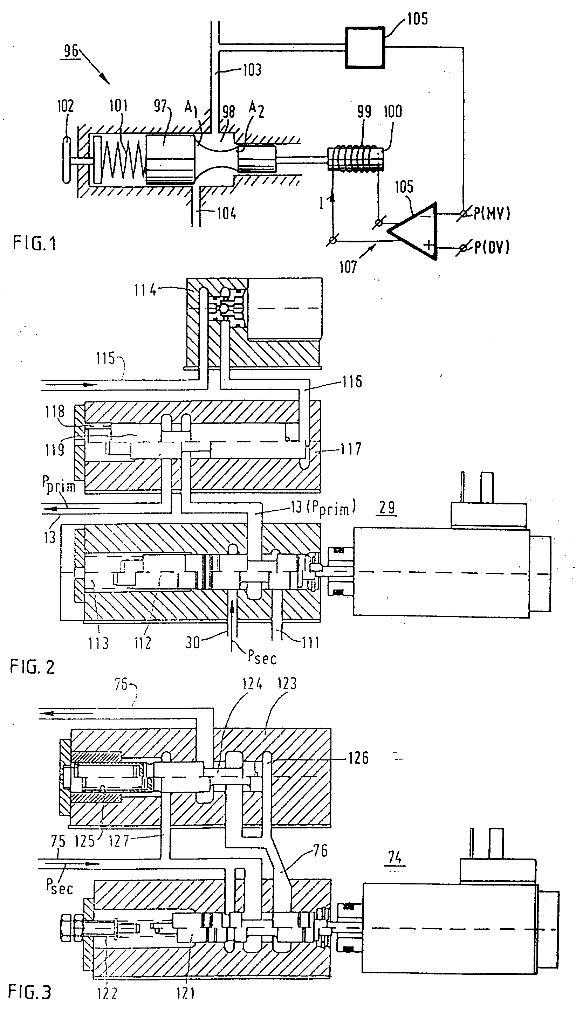

If such a high pressure is undesirable for a prolonged time, e.g. because it might result in damage to the transmission, the electro-mechanical means may be design such that in the event of a power failure a constant lower pressure is set. Besides the electro-mechanical means also additional control means may be provided which, only in the event of a power failure, set the high or low pressure adjusted by the electro-mechanical means to a required pressure level. Two possible embodiments are illustrated in Figures 2 and 3.

Figure 2 shows electronic control means 29 which are in the shape of hydraulic moving means and have an ingoing line 30 whith P_{sec} and an outgoing line 13 with the set pressure Pₚᵣᵢₘ. Hydraulic medium can be discharged via an outgoing line 111. In the event of a power failure the valve body 112 will move to the right under the influence of the spring 113, as a result of which the ingoing line 30 is no longer in contact with the ingoing line 13. There is a connection between the line 13 and the line 111, so that hydraulic medium will flow from the line 13 via the line 111. As a result of this Pₚᵣᵢₘ in the line 13 would quickly become lower in the event of a power failure. This is undesirable and is preferably avoided. For this purpose the control according to Figure 2 is furthermore provided with an on/off solenoid 114 and a safety valve 117. The safety valve 117 is placed in the line 13 of Pₚᵣᵢₘ. The on/off solenoid 114 is provided with an ingoing line 115 and an outgoing line 116, which is coupled to the safety valve 117. In the event of a power failure the on/off solenoid 114 closes the connection between the lines 115 and 116, as a result of which the control signal in the line 116 to the safety valve is blacked out. Under the influence of the spring 118 the valve body 119 of the safety valve 117 will move to the right, so that the line 13 of Pₚᵣᵢₘ is closed. As a result Pₚᵣᵢₘ cannot become lower in the event of a power failure, except for a slight leakage in the control system, which is common. As a result of said leakage Pₚᵣᵢₘ will decrease only slowly. Thus a safe electronic control is obtained, also in the event of a power failure.

Figure 3 shows another electronic control means 74 which are provided with an ingoing line 75, which is coupled to a pump (not shown) and an outgoing line 76. In this case the moving means 74 are designed such, however, that in the event of a power failure the connection between the ingoing line 75 (P_{sec}) and the outgoing line becomes maximal, because in the event of a power failure the valve body 121 is completely pushed to the right in Figure 3 under the influence of the spring 122. In this case Psec is set to a safe pressure in the line 75, as a result of the large discharge of medium via the line 76. Said P_{sec} cannot be optimal, however, e.g. to drive a transmission. In order to make it possible for the transmisssion to be driven even in the event of a power failure a hydraulic auxiliary valve 12 is provided in the discharge line 76. Said auxiliary valve 123 has a valve body 124 and a spring 125. Furthermore the pressure of the discharge line 76 acts on the valve 124 at 126. Said pressure of the discharge line 76 at 126 acts against the spring 125. On the other hand the spring 125 is supported again at 127 by the pressure P_{sec} in the line 75.

With normal use P_{sec} at 127 will always be larger than the pressure in teh discharge line 76 at 126 so that, also under the influence of the spring 125, the valve body 124 is mainly directly towards the right in Figure 3, so that the valve body 124 will at all times allow a certain flow of hydraulic medium through the line 76. In the event of a power failure the pressure in the line 76, and at 126, will increase, as a result of which the valve 124 will move to the left in Figure 3, thus further controlling the flow in the line 76 and thus also P_{sec} in the line 75. Thus the auxiliary valve 123 has taken over the control of P_{sec} in the event of power failure, and sets it to such a low value that the transmission can be driven, but that the transmission is not loaded by high pressure, which might lead to damage.

It will be apparent that within the framework of the invention several other embodiments for electro-mechanical means are conceivable. Thus the electro-mechanical means may be provided with several supply and/or discharge lines, as well as with control edges. Furthermore the valve body 97 itself may also serve as a core for the coil 99.

With the electro-mechanical means, in particular those wherein the valve body is directly connected to the core of the coil or wherein the valve body itself functions as a core, instability of hysteresis may occur when the coil is driven with a certain current. According to the invention this can be largely prevented, however, by proviing a dither frequently on the current.

In the event of large changes in the required control current, e.g. by braking of a vehicle, the control may furthermore be selflearning, in such a manner that the driving current, without control steps, is directly taken to the required value, after which the control takes over the current adjustment.

## Claims

1. Electro-mechanical means comprising an axially movable valve body, and a coil having a movable core, characterized in that the core is connected to the valve body, whereby the position of the valve body is influenced by driving the coil, so as to set one or more pressure levels.

2. Electro-mechanical means according to claim 1, characterized in that the valve body also functions as a core and is partially located within the coil for that purpose.

3. Electro-mechanical means according to claim 1 or 2, characterized in that the valve body has at least one surface in a space to be filled with hydraulic fluid, so as to exert a hydraulic force on the valve body, which force, combined with the forece produced by driving the coil, is utilized for influencing the position of the valve body so as to set one or more pressure levels.

4. Electro-mechanical means according to any one of the claims 1-3, characterized in that said means have a spring coupled to the valve body, which pushes the valve body in the direction of the position in which the highest pressure is set.

5. Electro-mechanical means according to any one of the claims 1-3, characterized in that the coil povides a dither frequency on the current, so as to stabilize the electro-mechanical means.
